# EUROPÄISCHE PATENTANMELDUNG

(11) **EP 3 672 101 A1**
(43) Veröffentlichungstag der Anmeldung: **24.06.2020**
(21) Anmeldenummer: 18215054.0
(22) Anmeldetag: 21.12.2018
(51) Int. Cl.: H04B 7/06, B60Q 1/00

(54) **KOMMUNIKATIONSFÄHIGER FAHRZEUGSCHEINWERFER**

(71) Anmelder: ZKW Group GmbH, 3250 Wieselburg (AT)
(72) Erfinder: Weber, Emanuel, 2500 Baden (AT); Fochler, Karl, 2493 Lichtenwörth (AT); Kieslinger, Dietmar, 2604 Theresienfeld (AT); Fritz, Gerald, 2831 Warth (AT)
(74) Vertreter: Patentanwaltskanzlei Matschnig & Forsthuber OG

(57) **Zusammenfassung**

Die Erfindung betrifft einen kommunikationsfähigen Fahrzeugscheinwerfer (1), insbesondere Kraftfahrzeugscheinwerfer, umfassend
- zumindest ein Leuchtmodul (2) zur Abstrahlung von Licht auf eine Fahrbahn (3) zumindest in Form einer Abblendlichtverteilung (A-LV),
- zumindest eine Sendeeinheit (4) zur räumlich lückenlosen Abstrahlung von fahrtabhängigen Daten (D) in den von der Lichtverteilung (A-LV, F-LV) des zumindest einen Leuchtmoduls erfassbaren Raumes (5), wobei dieser Raum einen potentiellen Bewegungsraum eines den Fahrzeugscheinwerfer (1) umfassenden Fahrzeugs (6) umfasst,
- zumindest ein Fahrzeugscheinwerfergehäuse (7), das durch eine Abdeckscheibe (8) geschlossen ist, wobei das Leuchtmodul (2) und die Sendeeinheit (4) innerhalb des Fahrzeugscheinwerfergehäuses (7) angeordnet sind und die Abdeckscheibe (8) dergestalt ausgebildet ist, dass diese für das Licht des Leuchtmoduls (2) als auch die Abstrahlung der Sendeeinheit (4) durchlässig ist,
wobei die Sendeinheit (4) dergestalt angeordnet und dazu eingerichtet ist, die fahrtabhängigen Daten (D) gerichtet abzustrahlen, wobei die Richtwirkung dergestalt ausgebildet ist, dass die Abstrahlung der fahrtabhängigen Daten (D) im Wesentlichen auf den durch die Lichtverteilung des zumindest einen Leuchtmoduls (2) erfassbaren Raum (5) beschränkt ist, wobei die Abstrahlung der Sendeeinheit (4) frei von sichtbarem Licht ist.

## Beschreibung

Die Erfindung betrifft einen kommunikationsfähigen Fahrzeugscheinwerfer, insbesondere Kraftfahrzeugscheinwerfer, umfassend
- zumindest ein Leuchtmodul zur Abstrahlung von Licht auf eine Fahrbahn zumindest in Form einer Abblendlichtverteilung,
- zumindest eine Sendeeinheit zur räumlich lückenlosen Abstrahlung von fahrtabhängigen Daten in den von der Lichtverteilung des zumindest einen Leuchtmoduls erfassbaren Raumes, wobei dieser Raum einen potentiellen Bewegungsraum eines den Fahrzeugscheinwerfer umfassenden Fahrzeugs umfasst,
- zumindest ein Fahrzeugscheinwerfergehäuse, das durch eine Abdeckscheibe geschlossen ist, wobei das Leuchtmodul und die Sendeeinheit innerhalb des Fahrzeugscheinwerfergehäuses angeordnet sind und die Abdeckscheibe dergestalt ausgebildet ist, dass diese für das Licht des Leuchtmoduls als auch die Abstrahlung der Sendeeinheit durchlässig ist.

Kommunikationsfähige Fahrzeugscheinwerfer sind aus dem Stand der Technik bekannt geworden. Beispielsweise ist aus der AT 15827 U1 ein Scheinwerfer bekannt, bei dem die Lichtabstrahlung des Scheinwerfers manipuliert werden kann, um Dritten anhand der Manipulation der Lichtabstrahlung gezielt Informationen zukommen zu lassen. Das Leuchtmodul des Scheinwerfers agiert damit gleichzeitig als Sendeeinheit, wodurch die Möglichkeiten zur Informationsübertragung deutlich eingeschränkt sind.

Alternativ dazu ist aus der EP 559546 A1 ein Leuchtmodul für einen Scheinwerfer bekannt geworden, dass eine Antenne umfasst, mittels derer Informationen an die Umgebung des Leuchtmodules abgestrahlt werden können. Dabei wird insbesondere die Abstrahlung von Anti-Kollisions-Radarsignalen erwähnt. Diese Vorrichtung hat allerdings den Nachteil, dass die Informationsabstrahlung weitgehend ungerichtet erfolgt und damit Verkehrsteilnehmer erreicht, für die die ausgesendete Information irrelevant ist. Im günstigsten Fall wird die ausgesendete Information von dem (nicht!)betreffenden Verkehrsteilnehmer ignoriert, im ungünstigsten Fall wird die Information fehlinterpretiert und es werden Maßnahmen wie beispielsweise eine Vollbremsung eingeleitet. Die ungerichtete Abstrahlung hat jedenfalls zur Folge, dass Informationen auch jene Verkehrsteilnehmer erreichen können, für die diese Information irrelevant ist. Dies führt zu erhöhtem Datenaufkommen, zu der Gefahr von Fehlinterpretationen als auch zu der Gefahr, dass dadurch tatsächlich verkehrsrelevante Informationen eines Vierten nicht rechtzeitig oder nicht ausreichend erfasst werden.

Es ist daher eine Aufgabe der vorliegenden Erfindung einen Scheinwerfer zu schaffen, der die genannten Probleme des Standes der Technik überwindet und erhöhte Sicherheit bietet. Diese Aufgabe wird mit einem Scheinwerfer der eingangs genannten Art gelöst, bei dem erfindungsgemäß die Sendeinheit dergestalt angeordnet und dazu eingerichtet ist, die fahrtabhängigen Daten gerichtet abzustrahlen, wobei die Richtwirkung dergestalt ausgebildet ist, dass die Abstrahlung der fahrtabhängigen Daten im Wesentlichen auf den durch die Lichtverteilung des zumindest einen Leuchtmoduls erfassbaren Raum beschränkt ist, wobei die Abstrahlung der Sendeeinheit frei von sichtbarem Licht ist.

Bei der Sendeeinheit handelt es sich damit nicht um ein Lichtmodul, sondern beispielsweise um einen Sender, umfassend eine Antenne, die zur Übertragung digitaler Daten eingerichtet ist. Es können hierfür zB Biquad-Antennen, Waveguide-Antennen (d.h. Hornstrahler) eingesetzt werden. Insbesondere die Verwendung von Hornstrahlern kann dabei günstig sein, da diese in Ihrer geometrischen Form üblichen Lichtreflektorformen gleichen. Mittels einer entsprechenden metallischen Oberflächenbeschichtung der Oberfläche der Antenne, z.B. eine Aluminium- oder Kupferbeschichtung, können die Sendesignale abgestrahlt und gegebenenfalls auch empfangen werden. Der Frequenzbereich des Sendesignals kann sich beispielsweise in einem Bereich zwischen 300 MHz und 3 GHz bewegen. Auch kann sich der Bereich von 20 MHz bis 3 GHz bewegen. Damit können sowohl Wlan-Frequenzen (20 MHz bis 160 MHz) als auch Bluetoothfrequenzen (ca. 2,4 GHz) von dem Frequenzspektrum umfasst sein. Durch Vorsehen einer Antenne, die zur Übertragung der digitalen Daten eingerichtet ist, kann verhindert werden, dass die von dem Fahrzeugscheinwerfer abgestrahlte Lichtverteilung von der Sendeinheit negativ beeinflusst wird. Durch den erfindungsgemäßen Scheinwerfer wird sichergestellt, dass die Informationsabstrahlung nur in jenen Bereich erfolgt, der durch das Fahrzeug auch theoretisch bei der Geradeaus- oder Kurvenfahrt befahren werden kann. Die Informationen werden damit nur an jene Verkehrsteilnehmer gesendet, für die die Informationen auch relevant sind. Der Scheinwerfer ermöglicht damit eine erhöhte Verkehrssicherheit für alle beteiligten Verkehrsteilnehmer.

Unter dem Ausdruck "Kommunikation" wird vorliegend bereits die einseitige (unidirektionale) Übertragung von Informationen verstanden, d.h. es wird keine Antwort der Informationsempfänger vorausgesetzt.

Unter dem Ausdruck "durch die Lichtverteilung des zumindest einen Leuchtmoduls erfassbaren Raumes" wird ein Raum verstanden, der aufgrund der Abstrahlung der Lichtverteilung durchleuchtet wird.

Der Ausdruck, wonach "die Abstrahlung der fahrtabhängigen Daten im Wesentlichen auf den durch die Lichtverteilung des zumindest einen Leuchtmoduls erfassbaren Raum beschränkt ist" bedeutet, dass danach getrachtet wird, die fahrtabhängigen Daten so gut als möglich ausschließlich in dem durch das Leuchtmodul erfassbaren Raum zugänglich zu machen. Dies ist innerhalb der Grenzen der Richtwirkung von Abstrahlung durch Antennen und Sendeeinrichtungen zu verstehen. Es versteht sich von selbst, dass eine absolut scharfe Grenze aufgrund der Kontinuität der abgestrahlten Größen, beispielsweise elektromagnetischer Wellen, nicht möglich ist. Der Ausdruck ist daher so zu verstehen, dass danach getrachtet wird, dass die Intensität der abgestrahlten Information innerhalb des erfassbaren Raumes innerhalb eines Maximalbereiches liegt und außerhalb dieses Raumes rasch und kontinuierlich abnimmt.

Der Begriff "Fahrbahn" wird im Folgenden lediglich zur vereinfachten Darstellung verwendet, denn selbstverständlich hängt es von den örtlichen Gegebenheiten ab, ob sich das Lichtbild tatsächlich auf der Fahrbahn befindet oder auch darüber hinaus erstreckt. Z.B. um die abgestrahlten Lichtverteilungen zu testen, erzeugt man eine Projektion des Lichtbildes auf eine vertikale Fläche entsprechend der einschlägigen Normen, beispielsweise entsprechend der Regelungen Nummer 123 und 48 der Wirtschaftskommission für Europa der Vereinten Nationen (UN/ECE) "Einheitliche Bedingungen für die Genehmigung von adaptiven Frontbeleuchtungssystemen (AFS) für Kraftfahrzeuge" und "Einheitliche Bedingungen für die Genehmigung der Fahrzeuge hinsichtlich des Anbaus der Beleuchtungs- und Lichtsignaleinrichtungen", den für die Vereinigten Staaten von Amerika gültigen Federal Motor Vehicle Safety Standard FMVSS No. 108 "Lamps, reflective devices, and associated equipment", der im Code of Federal Regulations CFR unter dem Title 49: Transportation im Chapter V, Part 571-Federal Motor Vehicle Standards im Subpart B als §571.108 angegeben ist, sowie dem National Standard of the People's Republic of China GB/T 30036/2013 "Adaptive Front-Lighting System for Motor Vehicles", die sich auf die KFZ-Beleuchtungstechnik beziehen.

Eine Abblendlichtverteilung als auch weitere Lichtverteilungen sind in den einschlägigen Normen hinreichend definiert. Es wird hierzu insbesondere auf die Normen nach den UN/ECE Regelungen in den Staaten der Europäischen Union, insbesondere Regelungen 123 und 48 verwiesen.

Vorzugsweise kann vorgesehen sein, dass die fahrtabhängigen Daten Informationen betreffend der Fahrtrichtung und der Fahrtgeschwindigkeit eines den Fahrzeugscheinwerfer umfassenden Fahrzeugs umfassen, und dass die Sendeeinheit dazu ausgelegt ist, diese Daten in den durch die Lichtverteilung des zumindest einen Leuchtmoduls erfassbaren Raum abzustrahlen, wobei die Sendeeinheit eine Schnittstelle aufweist, über die die fahrtabhängigen Daten an die Sendeeinheit zuführbar sind.

Insbesondere kann vorgesehen sein, dass der Fahrzeugscheinwerfer zudem eine Recheneinheit zur Ansteuerung der Sendeeinheit aufweist.

Vorzugsweise kann vorgesehen sein, dass der Fahrzeugscheinwerfer zumindest einen optischen Sensor, insbesondere eine Kamera, zur zumindest teilweisen Erfassung des durch die Lichtverteilung des zumindest einen Leuchtmoduls erfassbaren Raumes umfasst, wobei die durch den optischen Sensor erfassten Daten der Recheneinheit zugeführt sind, wobei die Recheneinheit dazu eingerichtet ist, basierend darauf andere Verkehrsteilnehmer, insbesondere Fahrzeuge und/oder Fußgänger, zu erfassen, wobei die Sendeeinheit dazu eingerichtet ist, die Abstrahlung in den besagten erfassbaren Raum zu segmentieren und dabei die Intensität der Abstrahlung und/oder den Inhalt der abgestrahlten Information zwischen unterschiedlichen Segmenten zu variieren, und Segmenten, in denen Verkehrsteilnehmer erfasst werden, basierend darauf hinsichtlich Intensität und/oder der abstrahlten Information in gegenüber verbleibenden Segmenten abweichender Weise auszustrahlen. Die Abweichung kann z.B. auf eine Art erfolgen, die eine gezielte Übertragung unterschiedlich angepasster Informationen zulässt. So können z.B. Warnsignale, Stoppsignale, Vorrangsignale, Nachrangsignale, "freie Fahrt"-Signale oder andere Signale gezielt an die einzelnen Verkehrsteilnehmer übertragen werden. Diese Signale können beispielsweise auf das Smartphone oder Wearables (wie z.B. Datenbrillen) von Fußgängern übertragen werden. Auch ist es denkbar, diese Daten an andere Fahrzeuge zu übertragen. Eine solche Kommunikation kann vor allem bei autonomen Fahrzeugen von großem Vorteil sein, die automatisiert auf die zugesendeten Informationen reagieren können.

Vorzugsweise kann vorgesehen sein, dass das zumindest eine Leuchtmodul und/oder ein weiteres Leuchtmodul ferner dazu eingerichtet ist, eine Fernlichtverteilung abzustrahlen, wobei die Sendeeinheit dazu eingerichtet ist, die Abstrahlung entsprechend eines durch die Fernlichtverteilung erfassten erweiterten Raumes zu erweitern. Grundsätzlich können mehrere Leuchtmodule vorgesehen sein, oder einzelne Leuchtmodule können mehrere Lichtfunktionen erfüllen. Beispiele unterschiedlicher Lichtverteilungen sind unter anderem dem Dokument AT 514967 B1 entnehmbar.

Insbesondere kann vorgesehen sein, dass der Fahrzeugscheinwerfer eine Empfangseinheit zum Empfang von Umgebungsdaten, insbesondere Daten bezüglich der Position und Bewegungsrichtung anderer Verkehrsteilnehmer umfasst.

Vorzugsweise kann vorgesehen sein, dass das Leuchtmodul eine Lichtquelle und einen Reflektor aufweist, wobei der Reflektor zur Abstrahlung des von der Lichtquelle abgestrahlten Lichtes in Form einer vorgegebenen Lichtverteilung eingerichtet ist, wobei dem Reflektor zudem die fahrtabhängigen Daten seitens der Sendeeinheit in Form von einer zeitlichen Abfolge entsprechend kodierter elektromagnetischen Wellen zugeführt sind, wobei der Reflektor zur Abstrahlung der elektromagnetischen Wellen der Sendeeinheit unter Ausnutzung seiner Richtwirkung zur Erzeugung der Lichtverteilung eingerichtet ist. Auf diese Weise kann kostengünstig und effizient sichergestellt werden, dass die Form der von der Sendeeinheit gerichteten Abstrahlung dergestalt ausgebildet ist, dass diese ausschließlich den von der Lichtverteilung erfassten Raum abdeckt. Wie bereits erwähnt, können als Antennen und damit gleichzeitig als Reflektor zB Biquad-Antennen, Waveguide-Antennen (d.h. Hornstrahler) eingesetzt werden. Insbesondere die Verwendung von Hornstrahlern kann dabei günstig sein, da diese in Ihrer geometrischen Form üblichen Lichtreflektorformen gleichen. Mittels einer entsprechenden metallischen Oberflächenbeschichtung der Oberfläche der Antenne, z.B. eine Aluminium- oder Kupferbeschichtung, können die Sendesignale abgestrahlt und gegebenenfalls auch empfangen werden. Der Frequenzbereich des Sendesignals kann sich beispielsweise in einem Bereich zwischen 300 MHz und 3 GHz bewegen. Auch kann sich der Bereich von 20 MHz bis 3 GHz bewegen. Damit können sowohl Wlan-Frequenzen (20 MHz bis 160 MHz) als auch Bluetoothfrequenzen (ca. 2,4 GHz) von dem Frequenzspektrum umfasst sein.

Insbesondere kann vorgesehen sein, dass die Abdeckscheibe aus Kunststoff gefertigt ist. Die Möglichkeit, Informationen durch die Abdeckscheibe des Fahrzeugscheinwerfers nach außen abzustrahlen, ist besonders vorteilhaft, da andere Bereiche von Fahrzeugen regelmäßig von Metallteilen bedeckt sind, die eine Abstrahlung erschweren.

Des Weiteren betrifft die Erfindung ein Fahrzeug, insbesondere Kraftfahrzeug, umfassend einen erfindungsgemäßen Fahrzeugscheinwerfer.

Vorzugsweise kann vorgesehen sein, dass das Fahrzeug Mittel zur Bestimmung der Geschwindigkeit und der Position des Fahrzeuges aufweist, wobei das Positionsbestimmungsmittel insbesondere zumindest eine Kamera und/oder einen GPS-Sensor umfasst, wobei das Fahrzeug ferner eine Fahrzeugrecheneinheit aufweist, die mit den besagten Mitteln sowie der Sendeinheit verbunden ist und dazu eingerichtet ist, unter Berücksichtigung der von diesen Mitteln gelieferten Daten die fahrtabhängigen Daten zu berechnen und die Sendeinheit zur Übermittlung der fahrtabhängigen Daten in den durch die Lichtverteilung des zumindest einen Leuchtmoduls erfassbaren Raum anzusteuern. Auf diese Weise können die Empfänger der Daten ihre Bewegungsrichtung mit der Bewegungsrichtung des Fahrzeuges vergleichen und das Vorhandensein von Kollisionsgefahr prüfen.

Insbesondere kann vorgesehen sein, dass das Fahrzeug zudem ein Navigationssytem umfasst, wobei das Navigationssystem mit der Fahrzeugrecheneinheit verbunden ist, und der Fahrzeugrecheneinheit Navigationsdaten zugeführt sind, wobei die Fahrzeugrecheneinheit dazu eingerichtet ist, daraus eine Fahrtrichtungsinformation abzuleiten und in die auszusendenden fahrtabhängigen Daten als Zusatzinformation aufzunehmen und durch die Sendeeinheit abstrahlen zu lassen. Auf diese Weise können die Empfänger der Daten ihre Bewegungsrichtung mit der aktuellen und einer basierend auf den Navigationsdaten prognostizierten Bewegungsrichtung des Fahrzeuges vergleichen und das Vorhandensein von Kollisionsgefahr prüfen.

Vorzugsweise kann vorgesehen sein, dass die Fahrzeugrecheneinheit dazu eingerichtet ist, Fahrt- und Positionsinformationen des Fahrzeuges zur Unterscheidung der nächtlichen Zulässigkeit von Abblendlichtverteilung oder Fernlichtverteilung heranzuziehen, und die Abstrahlung durch die Sendeeinheit in Abhängigkeit davon vorzugeben, wobei die Abstrahlung durch die Sendeeinheit unabhängig davon erfolgt, ob die Abblendlichtverteilung oder die Fernlichtverteilung tatsächlich abgestrahlt wird. Es ist damit nicht relevant, ob die Lichtmodule tatsächlich Licht abstrahlen. Die Lichtmodule können z.B. bei hellem Tageslicht außer Betrieb sein und dennoch kann die im Betriebsfall vorliegende Lichtverteilung der Lichtmodule als Referenz für die Abstrahlung herangezogen werden. Typischerweise wird das Fernlicht bei höherer Fahrtgeschwindigkeit außer Orts aktiviert. Der durch die Fernlichtverteilung erfasste räumliche Bereich ist gegenüber der Abblendlichtverteilung vergrößert. Die Abstrahlung wird analog dazu ebenso erweitert. Dies ist von besonderem Vorteil, da gerade in Situationen, in denen eine Fernlichtverteilung anwendbar ist, Geschwindigkeiten erhöht sind und damit eine höhere Reichweite der Abstrahlung wünschenswert ist.

Die Erfindung betrifft ferner ein Verkehrssicherheitssystem, umfassend ein erfindungsgemäßes Fahrzeug und zumindest ein weiteres, einen Verkehrsteilnehmer kennzeichnendes Objekt, insbesondere ein Fahrzeug, ein Smartphone, oder eine anderes tragbares prozessorgesteuertes Gerät, wobei das zumindest eine weitere Objekt eine Empfangs- und Auswerteeinheit zum Empfang und zur Auswertung der von der Sendeeinheit des Fahrzeuges abgestrahlten fahrtabhängigen Daten aufweist.

Anders ausgedrückt, kann der Hintergrund der Erfindung und die Erfindung selbst auch wie folgt beschrieben werden:
In der Automotive Branche ist das Thema "Autonomes Fahren" stark im Vormarsch. Einige Systeme, die ein teilautomatisiertes Fahren ermöglichen, sind hier bereits verfügbar, wie zB Tempomat, Spurhalteassistent, Einparkassistent. Um ein vollautonomes Fahren zu ermöglichen, benötigt das Fahrzeug unterschiedliche Kommunikationsschnittstellen zur Außenwelt. Über diese Schnittstellen können einerseits Information von außen in das Fahrzeug transferiert werden (zB Kamerabilder von der Umgebung, GPS Informationen,...) andererseits kann das Fahrzeug auch mit der Umwelt kommunizieren. Ein oft zitiertes Beispiel ist hier die Kommunikation mit anderen Straßenteilnehmern, wie zB Fußgängern. Eine Aufgabe dieser Erfindung ist es, eine Kommunikation mit Verkehrsteilnehmern aufzubauen, die sich im unmittelbaren "Gefahrengebiet des Fahrzeugs" befinden.

Eine Art der Kommunikation bestünde darin, Lichtsignale auf die Fahrbahn zu projizieren. Hier stellt man sich allerdings der Herausforderung, die Information, also das Lichtsignal, nur den betroffenen Teilnehmern bereitzustellen. So wäre es fatal, wenn ein "Du kannst gehen"-Signal für einen Passanten projiziert wird, jedoch ein zweiter Passant dieses Signal ebenfalls wahrnimmt und zu gehen beginnt, obwohl die Nachricht nicht an ihn gerichtet war.

Diese Erfindung beschreibt ein Kommunikationssystem, das sich um den Scheinwerfer des Fahrzeuges dreht. Damit soll die Eindeutigkeit der Zuordnung von Signalen auf die jeweiligen anderen Verkehrsteilnehmer drastisch verbessert werden.

Die Erfindung beruht auf der Ausnutzung des "Sichtfeldes des Scheinwerfers", das beispielsweise durch eine abgestrahlte Abblendlichtverteilung repräsentiert werden kann. Der Scheinwerfer hat die Aufgabe, den Straßenbereich vor dem Fahrzeug zu beleuchten. Der beleuchtete Bereich ist der Bereich, in den das Fahrzeug üblicherweise fahren wird.

Diese Tatsache wird durch die Erfindung ausgenutzt, um nur Verkehrsteilnehmer, die sich in diesem Bereich befinden, mit Informationen zu versorgen.

Ein großer Vorteil des Scheinwerfers im Gegensatz zu anderen Stellen im Fahrzeug ist die Materialbeschaffenheit. Scheinwerfer, und besonders die Streuscheiben, sind typischerweise aus Kunststoff gefertigt und somit durchsichtig für einen weiten Frequenzbereich von elektromagnetischen Strahlen. Somit kann der Sender selbst geschützt im Scheinwerfergehäuse untergebracht werden und trotzdem die Kommunikation mit der Außenwelt aufnehmen.

Die Erfindung ist im Folgenden anhand einer beispielhaften und nicht einschränkenden Ausführungsform näher erläutert, die in den Figuren veranschaulicht ist. Darin zeigt
Figur 1 eine schematische Darstellung eines erfindungsgemäßen Fahrzeugscheinwerfers, und
Figur 2 eine schematische Darstellung eines erfindungsgemäßen Sicherheitssystems sowie eines erfindungsgemäßen Fahrzeugs umfassend einen erfindungsgemäßen Fahrzeugscheinwerfer.

In den folgenden Figuren bezeichnen - sofern nicht anders angegeben - gleiche Bezugszeichen gleiche Merkmale.

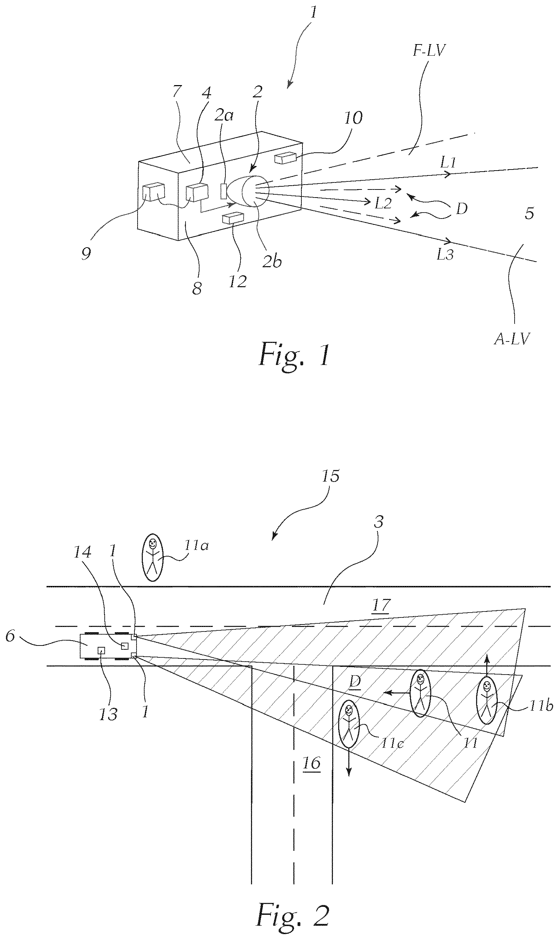

Figur 1 zeigt eine schematische Darstellung eines erfindungsgemäßen kommunikationsfähigen Fahrzeugscheinwerfers 1. Dieser Fahrzeugscheinwerfer 1 umfasst zumindest ein Leuchtmodul 2 zur Abstrahlung von Licht auf eine Fahrbahn 3 (siehe Fig. 2) zumindest in Form einer Abblendlichtverteilung A-LV, sowie zumindest eine Sendeeinheit 4 zur räumlich lückenlosen Abstrahlung von fahrtabhängigen Daten D in den von der Lichtverteilung A-LV des zumindest einen Leuchtmoduls 2 erfassbaren Raumes 5. Dieser Raum 5 erfasst wiederum einen potentiellen Bewegungsraum eines den Fahrzeugscheinwerfer 1 umfassenden Fahrzeugs 6. Das bedeutet, dass die volle Funktion des Fahrzeugscheinwerfers 1 erst im eingebauten Zustand zu Entfaltung kommt, aber der Fahrzeugscheinwerfer 1 natürlich bereits vorab für diese Funktionalität konzipiert ist. Der Ausdruck "potentieller Bewegungsraum" ist dabei nicht von dem Typ des Fahrzeuges 6 abhängig, sondern im Sinne der vorliegenden Erfindung lediglich durch die Lage und Orientierung des Fahrzeugscheinwerfers 1 bestimmt, wobei der Fahrzeugscheinwerfer 1 an der Vorderseite eines Fahrzeuges 6 angeordnet ist und damit in Fahrtrichtung orientiert ist.

Der Fahrzeugscheinwerfer 1 umfasst weiters zumindest ein Fahrzeugscheinwerfergehäuse 7, das durch eine Abdeckscheibe 8 geschlossen ist. Das Leuchtmodul 2 und die Sendeeinheit 4 sind innerhalb des Fahrzeugscheinwerfergehäuses 7 angeordnet. Die Abdeckscheibe 8 ist dergestalt ausgebildet, dass diese für das Licht des Leuchtmoduls 2 als auch die Abstrahlung der Sendeeinheit 4 durchlässig ist.

Erfindungsgemäß ist die Sendeinheit 4 dergestalt angeordnet und dazu eingerichtet, dass die fahrtabhängigen Daten D gerichtet abgestrahlt werden. Dabei ist die Richtwirkung dergestalt ausgebildet, dass die Abstrahlung der fahrtabhängigen Daten D im Wesentlichen auf den durch die Lichtverteilung A-LV des zumindest einen Leuchtmoduls 2 erfassbaren Raum 5 beschränkt ist. Dabei ist die Abstrahlung der Sendeeinheit 4 frei von sichtbarem Licht.

Die fahrtabhängigen Daten D können Informationen betreffend der Fahrtrichtung und der Fahrtgeschwindigkeit eines den Fahrzeugscheinwerfer 1 umfassenden Fahrzeugs 6 umfassen. Die Sendeeinheit 4 ist dazu ausgelegt, diese Daten D in den durch die Lichtverteilung des zumindest einen Leuchtmoduls 2 erfassbaren Raum 5 abzustrahlen. Die Sendeeinheit 4 weist hierfür eine Schnittstelle auf, über die die fahrtabhängigen Daten D an die Sendeeinheit 4 zugeführt werden.

Der Fahrzeugscheinwerfer 1 kann eine Recheneinheit 9 zur Ansteuerung der Sendeeinheit 4 aufweisen. Zudem kann vorgesehen sein, dass der Fahrzeugscheinwerfer 1 zumindest einen optischen Sensor 10, insbesondere eine Kamera, zur zumindest teilweisen Erfassung des durch die Lichtverteilung des zumindest einen Leuchtmoduls 2 erfassbaren Raumes 5 umfasst. Dabei sind die durch den optischen Sensor 10 erfassten Daten der Recheneinheit 9 zugeführt, wobei die Recheneinheit 9 dazu eingerichtet ist, basierend darauf andere Verkehrsteilnehmer 11, insbesondere Fahrzeuge und/oder Fußgänger, zu erfassen. Die Sendeeinheit 4 kann dabei dergestalt ausgebildet sein, dass die Abstrahlung in den besagten erfassbaren Raum 5 segmentiert wird und dabei die Intensität der Abstrahlung und/oder der Inhalt der abgestrahlten Information D zwischen unterschiedlichen Segmenten variiert wird. So können Segmenten, in denen Verkehrsteilnehmer 11 erfasst werden, hinsichtlich Intensität und/oder der abstrahlten Information D speziell behandelt werden. Beispielsweise kann die Signalintensität in diesem Segment erhöht werden, um die Zuverlässigkeit der Signalerkennung durch den Verkehrsteilnehmer 11 zu erhöhen. Auch kann die Information D selbst angepasst werden, indem beispielsweise zusätzliche Warnhinweise hinzugefügt werden, wenn Kollisionsgefahr festgestellt wird. Insbesondere können dabei Stoppsignale übermittelt werden.

Zudem kann vorgesehen sein, dass das zumindest eine Leuchtmodul 2 und/oder ein weiteres Leuchtmodul ferner dazu eingerichtet ist, eine Fernlichtverteilung F-LV abzustrahlen, wobei die Sendeeinheit 4 dazu eingerichtet ist, die Abstrahlung entsprechend eines durch die Fernlichtverteilung F-LV erfassten erweiterten Raumes 5 zu erweitern. Dabei kann es günstig sein, wenn der Fahrzeugscheinwerfer 1 eine Empfangseinheit 12 zum Empfang von Umgebungsdaten, insbesondere Daten bezüglich der Position und Bewegungsrichtung anderer Verkehrsteilnehmer 11 umfasst. Auf diese Weise kann der Fahrzeugscheinwerfer 1 auch mit anderen kommunikationsfähigen Geräten, insbesondere kommunikationsfähigen Fahrzeugscheinwerfern entgegenkommender Fahrzeuge oder Smartphones oder Augmented-Reality Brillen oder anderen Wearables von Verkehrsteilnehmern kommunizieren und auf diese Weise ebenso Informationen über Verkehrsteilnehmer 11 erfassen. Einerseits kann dadurch die auszusendende Information D angepasst werden, indem Warn- oder Stopphinweise ausgesendet werden, z.B. wenn festgestellt wird, dass ein Verkehrsteilnehmer 11 sich in eine Richtung bewegt, die bei ungeänderter Fahrt eine Kollision bewirken würde. Anderseits kann die Fahrt des den Fahrzeugscheinwerfer 1 umfassenden Fahrzeugs 6 selbst angepasst werden, indem beispielsweise die Fahrtgeschwindigkeit verlangsamt und somit eine Kollision vermieden wird.

In der gezeigten Ausführungsform nach Fig. 1 weist das Leuchtmodul 2 eine Lichtquelle 2a und einen Reflektor 2b aufweist, wobei der Reflektor 2b zur Abstrahlung des von der Lichtquelle 2a abgestrahlten Lichtes in Form einer vorgegebenen Lichtverteilung eingerichtet ist. Bei der Lichtverteilung kann es sich um die bereits erwähnte Abblendlichtverteilung A-LV handeln. Dem Reflektor 2b sind dabei zusätzlich die die fahrtabhängigen Daten D repräsentierenden Signale seitens der Sendeeinheit 4 in Form von einer zeitlichen Abfolge entsprechend kodierter elektromagnetischen Wellen zugeführt sind, wobei der Reflektor 2b zur Abstrahlung der elektromagnetischen Wellen der Sendeeinheit 4 unter Ausnutzung seiner Richtwirkung, die ursprünglich zur Erzeugung der Lichtverteilung A-LV, F-LV vorgesehen ist, eingerichtet ist. Die Lichtverteilung, die durch den Reflektor abgestrahlt wird, ist durch beispielhafte Lichtstrahlen L1, L2 und L3 dargestellt. Zudem ist die Datenabstrahlung durch beispielhafte "Datenstrahlen" D dargestellt, die durch strichlierte Pfeilsymbole repräsentiert werden.

Figur 2 zeigt eine schematische Darstellung eines erfindungsgemäßen Sicherheitssystems 15 sowie eines erfindungsgemäßen Fahrzeugs 6 umfassend einen erfindungsgemäßen Fahrzeugscheinwerfer 1. Genauer gesagt, handelt es sich dabei um ein Fallbeispiel, in dem ein Fahrzeug 6 in einen Kreuzungsbereich einfährt.

Verkehrsteilnehmer 11, vorliegend ein Fußgänger, befindet sich im potentiellen Bewegungsbereich des Fahrzeuges 6, also einem potentiellen Gefahrenbereich, und soll demnach auch mit Informationen versorgt werden. Verkehrsteilnehmer 11a, vorliegend ein weiterer Fußgänger, befindet sich hingegen auf der anderen Straßenseite außerhalb des potentiellen Bewegungsbereiches des Fahrzeuges 6 und soll nicht in den Informationsaustausch mit eingebunden werden. Die Kommunikation von dem Fahrzeug 6 hin zu dem Fußgänger 11 erfolgt über zumindest einen der beiden Scheinwerfer 1. Vorliegend überlappen sich die Abstrahlbereich der Fahrzeugscheinwerfer 1 und es werden von beiden Fahrzeugscheinwerfern 1 die gleichen Informationen abgestrahlt. Die Fahrzeugscheinwerfer 1 können zu diesem Zweck miteinander verbunden und beispielsweise synchronisiert werden. Fußgänger 11 könnte z.B. ein Smartphone bei sich tragen, das zur Kommunikation mit dem Fahrzeugscheinwerfer 1 eingerichtet ist.

Die Auswahl eines entsprechenden Kommunikationsstandards liegt dabei im Können des Fachmannes und ist lediglich so zu wählen, dass die Kommunikation zuverlässig über die entsprechende Distanz erfolgen kann. Die im Scheinwerfer 1 integrierte Sendeeinheit 4 sendet richtungsgebunden Datenströme an den Fußgänger 11. Ein auf dem Smart-Phone bzw. beispielsweise auf einer Google-Brille installierte App erlaubt dem Scheinwerfer 1 die Kommunikation und es können Informationen an den Fußgänger 11 ausgesendet werden. Die Information kann z.B. wie folgt lauten: "Das Fahrzeug 6 neben dir, roter Kombi, fährt gerade weiter. Die Querstraße 16 kann passiert werden." Diese Information kann auf dem Display des Fußgängers 11 angezeigt werden. Der Fußgänger 11a hingegen erhält keine Information, da er sich nicht im Sichtbereich des Fahrzeugscheinwerfers bzw. nicht im potentiellen Bewegungsbereich des Fahrzeuges 6 befindet. Er bleibt daher von der Kommunikation unberührt.

Weiters ist es möglich, Informationen, die auf dem Endgerät beim Fußgänger 11 vorhanden sind, an den Scheinwerfer 1 zu senden, der diese empfangen kann. Die Kommunikation kann beispielsweise durch "Kontaktaufnahme" mit dem Scheinwerfer 1 ausgelöst werden, woraufhin der das Endgerät des Fußgängers 11 Daten an den Scheinwerfer 1 übermittelt. So ist Fußgänger 11b auch im Sichtfeld der Scheinwerfer 1 und bekommt die Information D ebenfalls übertragen. Der Fußgänger 11b bewegt sich in eine Richtung, die auf ein Überschreiten einer Hauptstraße 17 hinweist. Diese Information kann an das Fahrzeug 6 rückgemeldet werden, wodurch das Fahrzeug 6 in einen besonders wachsamen Modus versetzt wird und dabei den Fußgänger 11b genau überwacht. Befindet sich z.B. ein an der Hauptstraße 17 in diesem Bereich ein Zebrastreifen, so könnte das Fahrzeug 6 seine Geschwindigkeit reduzieren, um den Fußgänger 11b passieren zu lassen. Alternativ dazu könnte das Fahrzeug 6 ebenso zuerst ein Stoppsignal an den Fußgänger 11b senden. Ein weiterer Fußgänger 11c wird ebenso von dem Informationsaustausch erfasst, da er sich innerhalb des durch die Abblendlichtverteilung erfassten Raumes befindet. Dieser Fußgänger 11c bewegt sich allerdings von der Hauptstraße 17 weg, und zwar parallel zur Querstraße 16 neben dieser entlang. Die fahrtabhängigen Daten D sind daher für ihn nicht von Relevanz. Die App am Endgerät des Fußgängers 3 kann aus einer Kombination der Information des Fahrzeuges 6 plus der Bewegungsinformation des Endgerätes selbst ("Ich gehe geradeaus, weg von der Hauptstraße 15) die vom Fahrzeug erhaltenen Informationen als nicht relevant einstufen und deshalb nicht am Display des Fußgängers 11c anzeigen.

Das Fahrzeug 6 weist zumindest ein Mittel 13 zur Bestimmung der Geschwindigkeit und der Position des Fahrzeuges 6 auf, wobei das Positionsbestimmungsmittel insbesondere zumindest eine Kamera und/oder einen GPS-Sensor umfasst. Das Fahrzeug 6 weist ferner eine Fahrzeugrecheneinheit 14 auf, die mit den besagten Mitteln 13 sowie der Sendeinheit 4 verbunden ist und dazu eingerichtet ist, unter Berücksichtigung der von diesen Mitteln 13 gelieferten Daten die fahrtabhängigen Daten D zu berechnen und die Sendeinheit 4 zur Übermittlung der fahrtabhängigen Daten 4 in den durch die Lichtverteilung des zumindest einen Leuchtmoduls 2 erfassbaren Raum 5 anzusteuern.

Zudem kann das Fahrzeug ein Navigationssytem umfassen, wobei das Navigationssystem mit der Fahrzeugrecheneinheit 14 verbunden ist, und der Fahrzeugrecheneinheit 14 Navigationsdaten zugeführt sind, wobei die Fahrzeugrecheneinheit 14 dazu eingerichtet ist, daraus eine Fahrtrichtungsinformation abzuleiten und in die auszusendenden fahrtabhängigen Daten D als Zusatzinformation aufzunehmen und durch die Sendeeinheit 4 abstrahlen zu lassen. Dabei ist die Fahrzeugrecheneinheit 14 dazu eingerichtet, Fahrt- und Positionsinformationen des Fahrzeuges 6 zur Unterscheidung der nächtlichen Zulässigkeit von Abblendlichtverteilung A-LV oder Fernlichtverteilung F-LV heranzuziehen, und die Abstrahlung durch die Sendeeinheit 4 in Abhängigkeit davon vorzugeben, wobei die Abstrahlung durch die Sendeeinheit 4 unabhängig davon erfolgt, ob die Abblendlichtverteilung A-LV oder die Fernlichtverteilung F-LV tatsächlich abgestrahlt wird.

Ebenso betrifft die Erfindung ein Verkehrssicherheitssytem 15, umfassend ein erfindungsgemäßes Fahrzeug 6 und zumindest ein weiteres, einen Verkehrsteilnehmer 11 kennzeichnendes Objekt, insbesondere ein Fahrzeug, ein Smartphone, oder eine anderes tragbares prozessorgesteuertes Gerät, wobei das zumindest eine weitere Objekt eine Empfangs- und Auswerteeinheit zum Empfang und zur Auswertung der von der Sendeeinheit 4 des Fahrzeuges 6 abgestrahlten fahrtabhängigen Daten D aufweist.

## Patentansprüche

1. Kommunikationsfähiger Fahrzeugscheinwerfer (1), insbesondere Kraftfahrzeugscheinwerfer, umfassend
- zumindest ein Leuchtmodul (2) zur Abstrahlung von Licht auf eine Fahrbahn (3) zumindest in Form einer Abblendlichtverteilung (A-LV),
- zumindest eine Sendeeinheit (4) zur räumlich lückenlosen Abstrahlung von fahrtabhängigen Daten (D) in den von der Lichtverteilung (A-LV, F-LV) des zumindest einen Leuchtmoduls (2) erfassbaren Raumes (5), wobei dieser Raum einen potentiellen Bewegungsraum eines den Fahrzeugscheinwerfer (1) umfassenden Fahrzeugs (6) umfasst,
- zumindest ein Fahrzeugscheinwerfergehäuse (7), das durch eine Abdeckscheibe (8) geschlossen ist, wobei das Leuchtmodul (2) und die Sendeeinheit (4) innerhalb des Fahrzeugscheinwerfergehäuses (7) angeordnet sind und die Abdeckscheibe (8) dergestalt ausgebildet ist, dass diese für das Licht des Leuchtmoduls (2) als auch die Abstrahlung der Sendeeinheit (4) durchlässig ist,
**dadurch gekennzeichnet, dass** die Sendeinheit (4) dergestalt angeordnet und dazu eingerichtet ist, die fahrtabhängigen Daten (D) gerichtet abzustrahlen, wobei die Richtwirkung dergestalt ausgebildet ist, dass die Abstrahlung der fahrtabhängigen Daten (D) im Wesentlichen auf den durch die Lichtverteilung (A-LV, F-LV) des zumindest einen Leuchtmoduls (2) erfassbaren Raum (5) beschränkt ist, wobei die Abstrahlung der Sendeeinheit (4) frei von sichtbarem Licht ist.

2. Fahrzeugscheinwerfer (1), nach Anspruch 1, wobei die fahrtabhängigen Daten (D) Informationen betreffend der Fahrtrichtung und der Fahrtgeschwindigkeit eines den Fahrzeugscheinwerfer (1) umfassenden Fahrzeugs (6) umfassen und die Sendeeinheit (4) dazu ausgelegt ist, diese Daten (D) in den durch die Lichtverteilung des zumindest einen Leuchtmoduls (2) erfassbaren Raum (5) abzustrahlen, wobei die Sendeeinheit (4) eine Schnittstelle aufweist, über die die fahrtabhängigen Daten (D) an die Sendeeinheit (4) zuführbar sind.

3. Fahrzeugscheinwerfer (1) nach Anspruch 1 oder 2, wobei der Fahrzeugscheinwerfer (1) zudem eine Recheneinheit (9) zur Ansteuerung der Sendeeinheit (4) aufweist.

4. Fahrzeugscheinwerfer (1) nach Anspruch 3, wobei der Fahrzeugscheinwerfer (1) zumindest einen optischen Sensor (10), insbesondere eine Kamera, zur zumindest teilweisen Erfassung des durch die Lichtverteilung des zumindest einen Leuchtmoduls (2) erfassbaren Raumes (5) umfasst, wobei die durch den optischen Sensor (10) erfassten Daten der Recheneinheit (9) zugeführt sind, wobei die Recheneinheit (9) dazu eingerichtet ist, basierend darauf andere Verkehrsteilnehmer (11), insbesondere Fahrzeuge und/oder Fußgänger, zu erfassen, wobei die Sendeeinheit (4) dazu eingerichtet ist, die Abstrahlung in den besagten erfassbaren Raum (5) zu segmentieren und dabei die Intensität der Abstrahlung und/oder den Inhalt der abgestrahlten Information (D) zwischen unterschiedlichen Segmenten zu variieren, und Segmenten, in denen Verkehrsteilnehmer (11) erfasst werden, basierend darauf hinsichtlich Intensität und/oder der abstrahlten Information (D) in gegenüber verbleibenden Segmenten abweichender Weise auszustrahlen.

5. Fahrzeugscheinwerfer (1) nach einem der vorhergehenden Ansprüche, wobei das zumindest eine Leuchtmodul (2) und/oder ein weiteres Leuchtmodul ferner dazu eingerichtet ist, eine Fernlichtverteilung (F-LV) abzustrahlen, wobei die Sendeeinheit (4) dazu eingerichtet ist, die Abstrahlung entsprechend eines durch die Fernlichtverteilung (F-LV) erfassten erweiterten Raumes (5) zu erweitern.

6. Fahrzeugscheinwerfer (1) nach einem der vorhergehenden Ansprüche, wobei der Fahrzeugscheinwerfer (1) eine Empfangseinheit (12) zum Empfang von Umgebungsdaten, insbesondere Daten bezüglich der Position und Bewegungsrichtung anderer Verkehrsteilnehmer (11) umfasst.

7. Fahrzeugscheinwerfer (1) nach einem der vorhergehenden Ansprüche, wobei das Leuchtmodul (2) eine Lichtquelle (2a) und einen Reflektor (2b) aufweist, wobei der Reflektor (2b) zur Abstrahlung des von der Lichtquelle (2a) abgestrahlten Lichtes in Form einer vorgegebenen Lichtverteilung eingerichtet ist, wobei dem Reflektor (2b) zudem die fahrtabhängigen Daten (D) seitens der Sendeeinheit (4) in Form von einer zeitlichen Abfolge entsprechend kodierter elektromagnetischen Wellen zugeführt sind, wobei der Reflektor (2b) zur Abstrahlung der elektromagnetischen Wellen der Sendeeinheit (4) unter Ausnutzung seiner Richtwirkung, die ursprünglich zur Erzeugung der Lichtverteilung A-LV, F-LV vorgesehen ist, eingerichtet ist.

8. Fahrzeugscheinwerfer (1) nach einem der vorhergehenden Ansprüche, wobei die Abdeckscheibe (8) aus Kunststoff gefertigt ist.

9. Fahrzeug (6), insbesondere Kraftfahrzeug, umfassend einen Fahrzeugscheinwerfer (1) nach einem der vorhergehenden Ansprüche.

10. Fahrzeug (6) nach Anspruch 9, wobei das Fahrzeug (6) Mittel (13) zur Bestimmung der Geschwindigkeit und der Position des Fahrzeuges (6) aufweist, wobei das Positionsbestimmungsmittel insbesondere zumindest eine Kamera und/oder einen GPS-Sensor umfassen kann, wobei das Fahrzeug (6) ferner eine Fahrzeugrecheneinheit (14) aufweist, die mit den besagten Mitteln (13) sowie der Sendeinheit (4) verbunden ist und dazu eingerichtet ist, unter Berücksichtigung der von diesen Mitteln (13) gelieferten Daten die fahrtabhängigen Daten (D) zu berechnen und die Sendeinheit (4) zur Übermittlung der fahrtabhängigen Daten (4) in den durch die Lichtverteilung des zumindest einen Leuchtmoduls (2) erfassbaren Raum (5) anzusteuern.

11. Fahrzeug (6) nach Anspruch 10, wobei das Fahrzeug (6) zudem ein Navigationssytem umfasst, wobei das Navigationssystem mit der Fahrzeugrecheneinheit (14) verbunden ist, und der Fahrzeugrecheneinheit (14) Navigationsdaten zugeführt sind, wobei die Fahrzeugrecheneinheit (14) dazu eingerichtet ist, daraus eine Fahrtrichtungsinformation abzuleiten und in die auszusendenden fahrtabhängigen Daten (D) als Zusatzinformation aufzunehmen und durch die Sendeeinheit (4) abstrahlen zu lassen.

12. Fahrzeug (6) nach einem der Ansprüche 9 bis 11, wobei Fahrzeugrecheneinheit (14) dazu eingerichtet ist, Fahrt- und Positionsinformationen des Fahrzeuges (6) zur Unterscheidung der nächtlichen Zulässigkeit von Abblendlichtverteilung (A-LV) oder Fernlichtverteilung (F-LV) heranzuziehen, und die Abstrahlung durch die Sendeeinheit (4) in Abhängigkeit davon vorzugeben, wobei die Abstrahlung durch die Sendeeinheit (4) unabhängig davon erfolgt, ob die Abblendlichtverteilung (A-LV) oder die Fernlichtverteilung (F-LV) tatsächlich abgestrahlt wird.

13. Verkehrssicherheitssystem (15), umfassend ein Fahrzeug (6) nach einem der Ansprüche 9 bis 12 und zumindest ein weiteres, einen Verkehrsteilnehmer (11) kennzeichnendes Objekt, insbesondere ein Fahrzeug, ein Smartphone, oder eine anderes tragbares prozessorgesteuertes Gerät, wobei das zumindest eine weitere Objekt eine Empfangs- und Auswerteeinheit zum Empfang und zur Auswertung der von der Sendeeinheit (4) des Fahrzeuges (6) abgestrahlten fahrtabhängigen Daten (D) aufweist.
